# FASCICULE DE BREVET EUROPEEN

(11) **EP 3 986 771 B1**
(45) Date de publication et mention de la délivrance du brevet: **16.08.2023**
(21) Numéro de dépôt: 20742323.7
(22) Date de dépôt: 08.06.2020
(51) Int. Cl.: B62D 25/06, B62D 27/02

(54) **STRUCTURE DE VÉHICULE AUTOMOBILE AVEC PIÈCE DE RENFORCEMENT ENTRE LA TRAVERSE DE PAVILLON DE TOIT ET LA POUTRE D'ARC DE PAVILLON**
KRAFTFAHRZEUGSTRUKTUR MIT VERSTÄRKUNGSTEIL ZWISCHEN DEM DACHQUERTRÄGER UND DER DACHBOGENSTREBE
MOTOR VEHICLE STRUCTURE WITH REINFORCING PART BETWEEN THE ROOF CROSSMEMBER AND THE ROOF ARCH BEAM

(30) Priorité: 19.06.2019 FR 1906606
(43) Date de publication de la demande: 27.04.2022
(73) Titulaire: PSA Automobiles SA, 78300 Poissy (FR)
(72) Inventeur: THOR, Tou, 25150 PONT DE ROIDE VERMONDANS (FR); BORNIER, Paul, 70400 LUZE (FR)
(86) Numéro de dépôt international: PCT/FR2020/050970
(87) Numéro de publication internationale: WO 2020/254741

(56) Documents cités:
- EP-A2- 1 449 746
- DE-A1-102011 119 560
- JP-A- H0 976 937
- JP-A- 2016 002 840

## Description

### Domaine technique

La présente invention revendique la priorité de la demande française 1906606 déposée le 19 Juin 2020.

L'invention a trait au domaine des véhicules automobiles, et, plus particulièrement, à la structure d'un véhicule automobile.

### Technique antérieure

De nombreux organismes réalisent, pour le compte de gouvernements, des protocoles d'essais sur les véhicules servant notamment à tester leur fiabilité ou encore leur résistance lors d'un choc. Ainsi, un protocole de « choc latéral poteau » permet de tester la résistance du véhicule et les dégâts occasionnés aux passagers, lors d'un choc latéral au niveau du montant latéral central, ou pied milieu du véhicule.

La structure d'un véhicule automobile comprend, classiquement, deux poutres d'arc de pavillon positionnées de part et d'autre d'un pavillon de toit. Une traverse de pavillon de toit est positionnée en dessous du pavillon et est fixée latéralement aux deux poutres d'arc de pavillon. De plus, une pièce de renforcement peut être utilisée à chacune des extrémités de la traverse afin de renforcer la liaison avec la poutre d'arc de pavillon correspondante. Mais, lors d'un choc latéral poteau, l'extrémité de la traverse de toit peut se séparer de la poutre d'arc de pavillon correspondante, entraînant alors des dommages aux passagers.

Le document de brevet publié FR 2 932 150 A1 divulgue une traverse de pavillon de toit présentant des nervures, la traverse étant rattachée, à chacune de ses extrémités, à une poutre d'arc de pavillon. Mais la liaison entre l'extrémité de la traverse de pavillon de toit et la poutre d'arc de pavillon correspondante est fragile.

En effet, cette liaison présente un risque de rupture important en cas de choc latéral poteau.

Le document de brevet publié EP 1 449 746 A2 divulgue une liaison entre un montant latéral central, une traverse de pavillon de toit et le pavillon de toit d'un véhicule automobile. Une pièce de renforcement est positionnée entre les deux tôles formant le montant central latéral, et est fixée à la traverse de pavillon de toit et au pavillon de toit. Mais cette liaison peut être déficiente, notamment lors d'un choc latéral poteau.

Le document DE 10 2011 119560 A1 décrit une structure de véhicule automobile selon le préambule de la revendication 1.

### Exposé de l'invention

L'invention a pour objectif de pallier au moins un des inconvénients de l'état de la technique susmentionné. Plus particulièrement, l'invention a pour objectif d'améliorer la résistance de la liaison entre la traverse de pavillon de toit et la poutre d'arc de pavillon, notamment lors d'un choc latéral poteau.

L'invention a pour objet une structure de véhicule automobile, comprenant : deux poutres d'arc de pavillon disposées latéralement de part et d'autre de la structure de véhicule automobile, une traverse de pavillon de toit, comprenant deux extrémités fixées aux deux poutres d'arc de pavillon respectivement, et une pièce de renforcement à la fixation de chacune des extrémités de la traverse à la poutre d'arc de pavillon de toit correspondante, remarquable en ce que chacune des extrémités de la traverse de pavillon de toit est disposée entre la pièce de renforcement et la poutre d'arc de pavillon de toit correspondantes.

Selon un mode avantageux de l'invention, chacune des pièces de renforcement est un embouti s'étendant suivant une direction principale longitudinale, de part et d'autre de l'extrémité correspondante des deux extrémités de la traverse de pavillon de toit.

Selon l'invention, les deux extrémités de la traverse de pavillon de toit présentent des nervures, chacune des pièces de renforcement comprenant une portion centrale épousant les nervures de l'extrémité correspondante et deux portions distales fixées directement à la poutre d'arc de pavillon correspondante.

Selon l'invention, les portions distales de chacune des pièces de renforcement sont fixées par un ou plusieurs points de soudure à résistance électrique à la poutre d'arc de pavillon de toit.

Selon un mode avantageux de l'invention, la portion centrale de chacune des pièces de renforcement est fixée à l'extrémité correspondante des deux extrémités de la traverse de pavillon de toit par un ou plusieurs points de soudure à résistance électrique.

Selon un mode avantageux de l'invention, chacune des deux extrémités de la traverse de pavillon de toit est fixée à la poutre correspondante des deux poutres d'arc de pavillon de toit par un ou plusieurs points de soudure à résistance électrique.

Selon un mode avantageux de l'invention, chacune des pièces de renforcement présente une forme générale rectangulaire ou trapézoïdale.

Selon un mode avantageux de l'invention, chacune des pièces de renforcement dépasse latéralement vers l'intérieur du véhicule de la poutre d'arc de pavillon de toit.

Selon un mode avantageux de l'invention, le dépassement est d'au moins 15mm. Selon un mode avantageux de l'invention, la traverse de pavillon de toit est située longitudinalement au niveau de deux montants latéraux centraux.

Les mesures de l'invention sont intéressantes en ce qu'elles permettent d'améliorer la liaison entre la poutre d'arc de pavillon et la traverse de pavillon de toit. Cette amélioration est due à la présence d'une pièce de renforcement positionnée au-dessus de chaque extrémité de la traverse de pavillon de toit, la pièce étant fixée à la poutre d'arc de pavillon correspondante sous-jacente. Le positionnement de la pièce de renforcement au-dessus de chaque extrémité de la traverse permet le maintien de la liaison lors des deux phases d'un choc latéral poteau : la phase de cisaillement et la phase de traction. De plus, la pièce de renforcement est de conception et de fabrication simple, réalisée par des techniques et des matériaux connus de l'homme du métier. Sa fixation sur la structure du véhicule est également simple à mettre en oeuvre, et largement pratiquée dans l'industrie automobile.

D'autres caractéristiques et avantages de la présente invention seront mieux compris à l'aide de la description et des dessins.

### Brève description des dessins

[Fig 1] est une vue en perspective d'une structure de véhicule automobile ;
[Fig 2] est une vue éclatée de la liaison entre une poutre d'arc de pavillon, une traverse de pavillon de toit et une pièce de renforcement ;
[Fig 3] est une vue du dessus de la liaison représentée à la figure 2 ;
[Fig 4] est une vue en coupe de la liaison des figures 2 et 3, à un premier stade d'accomplissement d'un choc latéral poteau : la phase de cisaillement ;
[Fig 5] est une vue en coupe de la liaison des figures 2 et 3, à un deuxième stade d'accomplissement d'un choc latéral poteau : la phase de traction.

### Description détaillée

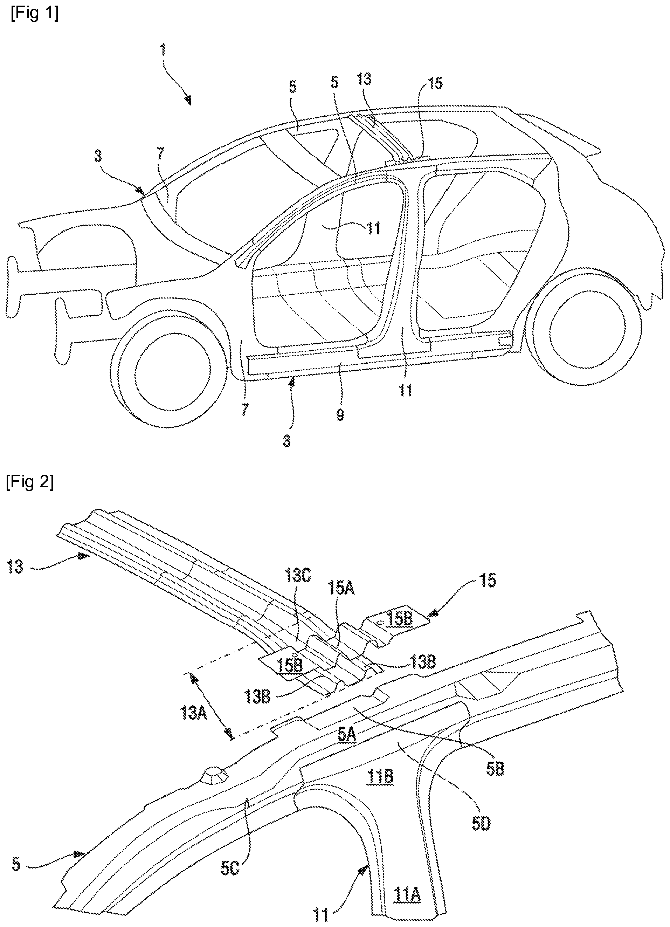

La figure 1 est une vue d'une structure de véhicule automobile selon l'invention.

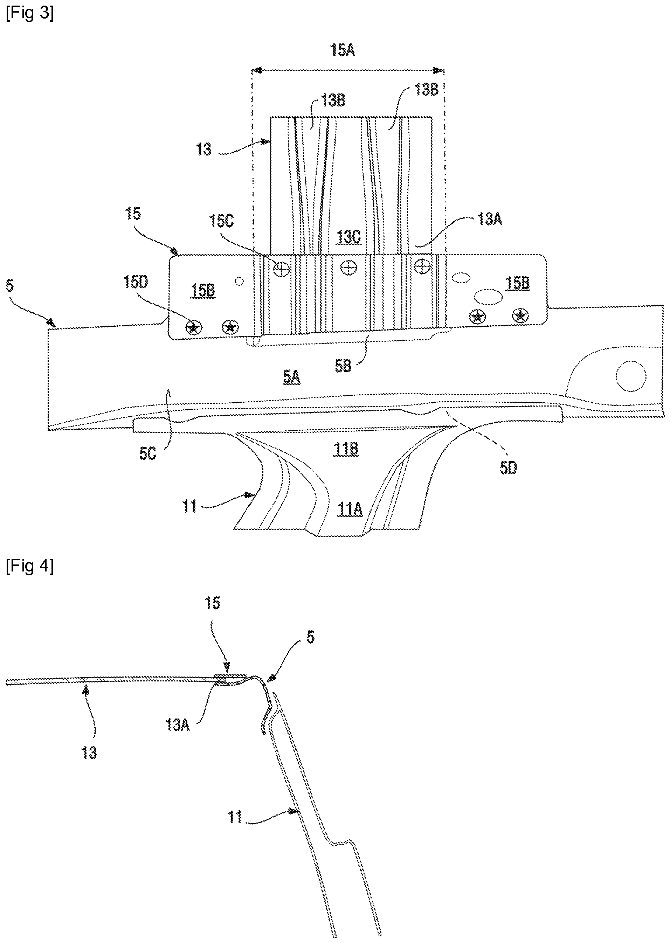

La structure 1 du véhicule comprend un pavillon de toit (non représenté pour des raisons de clarté) et deux côtés latéraux 3 situés de part et d'autre dudit pavillon. À chacun des côtés latéraux 3, et latéralement au pavillon de toit, se trouve une poutre d'arc de pavillon 5. Cette poutre 5 s'étend depuis un montant latéral avant 7, ou pied avant du véhicule, vers l'arrière du véhicule. De plus, à chacun des côtés 3 du véhicule, un montant latéral central 11, ou pied milieu du véhicule, s'étend depuis un soubassement 9 vers une portion médiane (montrée aux figures 2 et 3) de la poutre d'arc de pavillon 5 correspondante. Une traverse de pavillon de toit 13 s'étend également entre les deux poutres d'arc de pavillon 5, au niveau des montants latéraux centraux 11. Cette traverse 13 présente deux extrémités (visibles aux figures 2 à 5), chaque extrémité de la traverse 13 étant disposée entre une pièce de renforcement 15 et la poutre d'arc de pavillon 5 correspondante, chaque extrémité étant fixée à la poutre 5 correspondante. La pièce de renforcement 15 sert à renforcer la fixation de chacune des extrémités de la traverse 13 à la poutre d'arc de pavillon 5 correspondante.

Les figures 2 et 3 montrent deux vues de la liaison entre la traverse de pavillon de toit, la poutre d'arc de pavillon et la pièce de renforcement correspondantes. Ces figures reproduisent la liaison du côté gauche du véhicule, mais peuvent aussi s'appliquer à une liaison située du côté droit du véhicule.

Sur ces figures, le montant latéral central 11 comprend une portion verticale 11A s'étendant sur la hauteur de la structure du véhicule, et une extrémité supérieure 11B évasée à la jonction avec la poutre d'arc de pavillon 5. La portion verticale 11A du montant latéral central 11 a une section transversale en U apte à améliorer l'absorption des chocs, en particulier l'absorption d'un choc latéral poteau.

La poutre d'arc de pavillon 5 s'étend longitudinalement le long du pavillon de toit (non visible sur ces figures). La poutre d'arc de pavillon 5 présente une section transversale en U apte à améliorer l'absorption des chocs. La portion médiane 5A de chaque poutre 5 comprend un renfoncement 5B apte à accueillir l'extrémité 13A correspondante de la traverse de pavillon de toit 13. Sur une face externe 5C de la portion médiane 5A de la poutre 5 se trouve une zone de réception 5D de l'extrémité supérieure 11B du montant latéral central 11 correspondant. Ainsi, la traverse de toit 13 est située longitudinalement au niveau des deux montants latéraux centraux 11.

L'extrémité 13A de la traverse de pavillon de toit 13 comprend, sur les figures 2 et 3, des nervures 13B. De plus, cette extrémité 13A se loge dans le renfoncement 5B de la poutre d'arc de pavillon 5, et y est fixée par un ou plusieurs points de soudure à résistance électrique 15C. Une portion médiane 13C de la traverse 13 est en porte-à-faux entre les deux nervures 13B.

Enfin, la liaison comprend la pièce de renforcement 15. Cette pièce de renforcement 15 est un embouti de forme généralement rectangulaire ou trapézoïdale, et qui s'étend suivant une direction principale longitudinale, de part et d'autre de l'extrémité 13A de la traverse de pavillon de toit 13. La pièce de renforcement 15 comprend une portion centrale 15A qui épouse les nervures 13B de l'extrémité 13A de la traverse 13. Cette portion centrale 15A est fixée à l'extrémité 13A de la traverse 13 par un ou des points de soudure à résistance électrique 15C. La pièce de renforcement 15 comprend, en outre, deux portions distales 15B fixées directement à la poutre d'arc de pavillon 5 par un ou des points de soudure à résistance électrique 15D. De plus, la pièce de renforcement 15 dépasse latéralement vers l'intérieur du véhicule la poutre d'arc de pavillon 5, ce dépassement étant d'au moins 15mm.

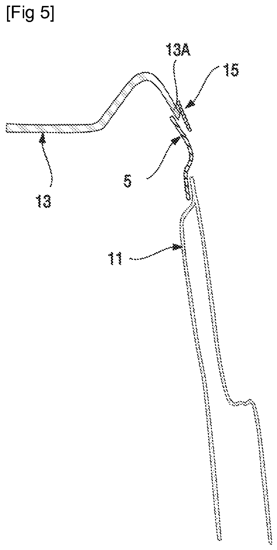

Les figures 4 et 5 montrent la liaison entre une extrémité de la traverse de pavillon de toit, le montant latéral central et la poutre d'arc de pavillon correspondants, lors d'un choc latéral poteau.

Dans un premier temps (figure 4), la liaison travaille en cisaillement. Le maintien de la liaison entre la traverse de pavillon de toit 13 et la poutre d'arc de pavillon 5 est réalisé par la présence de la pièce de renforcement 15, qui, en étant positionné sur l'extrémité 13A de la traverse 13, va la maintenir sur la poutre d'arc de pavillon 5 sous-jacente et ainsi assurer la tenue de la liaison.

Dans un second temps (figure 5), la liaison travaille en traction, suite au pliage de la traverse de pavillon de toit 13. Cette phase de traction doit arriver le plus tardivement possible, de manière à optimiser la fonction de la traverse 13. Au cours de cette phase, la traverse 13 est en appui sur la pièce de renforcement 15. L'effort est alors réparti sur toute la largeur de la pièce de renforcement 15, ce qui permet le maintien de la liaison lors de la deuxième phase du choc.

## Revendications

1. Structure (1) de véhicule automobile, comprenant :
- deux poutres d'arc de pavillon (5) disposées latéralement de part et d'autre de la structure (1) de véhicule automobile,
- une traverse de pavillon de toit (13), comprenant deux extrémités (13A) fixées aux deux poutres d'arc de pavillon (5) respectivement, et
- une pièce de renforcement (15) à la fixation de chacune des extrémités (13A) de la traverse (13) à la poutre d'arc de pavillon de toit (5) correspondante,
chacune des extrémités (13A) de la traverse de pavillon de toit (13) étant disposée entre la pièce de renforcement (15) et la poutre d'arc de pavillon de toit (5) correspondantes, les deux extrémités (13A) de la traverse de pavillon de toit (13) présentant des nervures (13B), chacune des pièces de renforcement (15) comprenant une portion centrale (15A) épousant les nervures (13B) de l'extrémité (13A) correspondante et deux portions distales (15B) **caractérisées en ce que** les deux portions distales (15B)
sont fixées directement à la poutre d'arc de pavillon (5) correspondante, les portions distales (15B) de chacune des pièces de renforcement (15) étant fixées par un ou plusieurs points de soudure à résistance électrique (15D) à la poutre d'arc de pavillon de toit (5).

2. Structure (1) de véhicule automobile selon la revendication 1, **caractérisée en ce que** chacune des pièces de renforcement (15) est un embouti s'étendant suivant une direction principale longitudinale, de part et d'autre de l'extrémité (13A) correspondante des deux extrémités (13A) de la traverse de pavillon de toit (13).

3. Structure (1) de véhicule automobile selon l'une des revendications précédentes, **caractérisée en ce que** la portion centrale (15A) de chacune des pièces de renforcement (15) est fixée à l'extrémité (13A) correspondante des deux extrémités (13A) de la traverse de pavillon de toit (13) par un ou plusieurs points de soudure à résistance électrique (15C).

4. Structure (1) de véhicule automobile selon l'une des revendications 1 à 3, **caractérisée en ce que** chacune des deux extrémités (13A) de la traverse de pavillon de toit (13) est fixée à la poutre (5) correspondante des deux poutres d'arc de pavillon de toit (5) par un ou plusieurs points de soudure à résistance électrique.

5. Structure (1) de véhicule automobile selon l'une des revendications 1 à 4, **caractérisée en ce que** chacune des pièces de renforcement (15) présente une forme générale rectangulaire ou trapézoïdale.

6. Structure (1) de véhicule automobile selon l'une des revendications 1 à 5, **caractérisée en ce que** chacune des pièces de renforcement (15) dépasse latéralement vers l'intérieur du véhicule de la poutre d'arc de pavillon de toit (5).

7. Structure (1) de véhicule automobile selon la revendication 6, **caractérisée en ce que** le dépassement est d'au moins 15mm.

8. Structure (1) de véhicule automobile selon l'une des revendications 1 à 7, **caractérisée en ce que** la traverse de pavillon de toit (13) est située longitudinalement au niveau de deux montants latéraux centraux (11).

## Patentansprüche

1. Fahrzeugstruktur (1), bestehend aus:
- zwei seitlich beiderseits der Kraftfahrzeugstruktur (1) angeordnete Dachbogenträger (5),
- eine Dachdachschwelle (13) mit zwei an den beiden Dachbogenbalken (5) befestigten Enden (13A) und
- ein Verstärkungsteil (15) zur Befestigung jedes der Enden (13A) des Querträgers (13) am entsprechenden Dachdachbogenbalken (5),
jedes der Enden (13A) des Dachhimmelträgers (13) ist zwischen dem Verstärkungsteil (15) und dem entsprechenden Dachhimmelbogenträger (5) angeordnet, wobei die beiden Enden (13A) des Dachhimmelträgers (13) Rippen (13B) aufweisen, wobei jedes der Verstärkungsteile (15) einen zentralen Abschnitt (15A) aufweist, der an die Rippen (13B) des entsprechenden Endes (13A) angepasst ist, und zwei distale Abschnitte (15B), die **dadurch gekennzeichnet sind, dass** die beiden diskalen Abschnitte (13) 5B) unmittelbar am entsprechenden Dachbogenbalken (5) befestigt sind, wobei die distalen Abschnitte (15B) jedes der Verstärkungsteile (15) durch eine oder mehrere elektrische Widerstandsschweißpunkte (15D) am Dachbogenbalken (5) befestigt sind.

2. Struktur (1) eines Kraftfahrzeugs nach Anspruch 1, **dadurch gekennzeichnet, dass** jedes der Verstärkungsteile (15) eine Ausstanzung ist, die sich in einer Hauptlängsrichtung zu beiden Seiten des entsprechenden Endes (13A) der beiden Enden (13A) des Dachhimmels (13) erstreckt.

3. Kraftfahrzeugstruktur (1) nach einem der vorhergehenden Ansprüche, **dadurch gekennzeichnet, dass** der mittlere Abschnitt (15A) jedes der Verstärkungsteile (15) an dem entsprechenden Ende (13A) der beiden Enden (13A) des Dachdachträgers (13) durch eine oder mehrere elektrische Widerstandsschweißpunkte (15C) befestigt ist.

4. Kraftfahrzeugstruktur (1) nach einem der Ansprüche 1 bis 3, **dadurch gekennzeichnet, dass** jedes der beiden Enden (13A) des Dachdachträgers (13) an dem entsprechenden Balken (5) der beiden Dachdachbogenbalken (5) durch eine oder mehrere elektrische Widerstandsschweißstellen befestigt ist.

5. Kraftfahrzeugstruktur (1) nach einem der Ansprüche 1 bis 4, **dadurch gekennzeichnet, dass** jedes der Verstärkungsteile (15) eine im Allgemeinen rechteckige oder trapezförmige Form aufweist.

6. Kraftfahrzeugstruktur (1) nach einem der Ansprüche 1 bis 5, **dadurch gekennzeichnet, dass** jedes der Verstärkungsteile (15) seitlich zum Fahrzeuginneren hin vom Dachdachbogenbalken (5) vorsteht.

7. Kraftfahrzeugstruktur (1) nach Anspruch 6, **dadurch gekennzeichnet, dass** der Überstand mindestens 15 mm beträgt.

8. Kraftfahrzeugstruktur (1) nach einem der Ansprüche 1 bis 7, **dadurch gekennzeichnet, dass** die Dachdachquertraverse (13) in Längsrichtung an zwei mittleren Seitenpfosten (11) angeordnet ist.

## Claims

1. A motor vehicle structure (1), comprising:
- two roof arch beams (5) arranged laterally on either side of the motor vehicle structure (1),
- a roof crosspiece (13), comprising two ends (13A) fixed to the two roof arch beams (5) respectively, and
- a reinforcement piece (15) for fixing each of the ends (13A) of the crosspiece (13) to the corresponding roof horn arch beam (5),
each of the ends (13A) of the roof-roof cross-member (13) being disposed between the reinforcing piece (15) and the corresponding roof-roof arch beam (5), the two ends (13A) of the roof-roof cross-member (13) having ribs (13B), each of the reinforcing pieces (15) comprising a central portion (15A) matching the ribs (13B) of the corresponding end (13A) and two distal portions (15B) **characterized in that** the two disk portions (15B) are attached directly to the corresponding roof arch beam (5), the distal portions (15B) of each of the reinforcement pieces (15) being attached by one or more electrical resistance welding points (15D) to the roof arch beam (5).

2. A motor vehicle structure (1) according to claim 1, **characterized in that** each of the reinforcement pieces (15) is a press-formed portion extending in a main longitudinal direction, on either side of the corresponding end (13A) of the two ends (13A) of the roof-roof cross-member (13).

3. A motor vehicle structure (1) according to one of the preceding claims, **characterized in that** the central portion (15A) of each of the reinforcement pieces (15) is fixed to the corresponding end (13A) of the two ends (13A) of the roof cross-member (13) by one or more electrically resistive welding points (15C).

4. A motor vehicle structure (1) according to one of claims 1 to 3, **characterized in that** each of the two ends (13A) of the roof beams (13) is fixed to the corresponding beam (5) of the two roof beams (5) by one or more electrically resistive welding spots.

5. A motor vehicle structure (1) according to one of claims 1 to 4, **characterized in that** each of the reinforcement pieces (15) has a generally rectangular or trapezoidal shape.

6. A motor vehicle structure (1) according to one of claims 1 to 5, **characterized in that** each of the reinforcement pieces (15) projects laterally towards the interior of the vehicle from the roof arch beam (5).

7. A motor vehicle structure (1) according to claim 6, **characterized in that** the overshoot is at least 15 mm.

8. A motor vehicle structure (1) according to one of claims 1 to 7, **characterized in that** the roof cross-member (13) is situated longitudinally at the level of two central lateral uprights (11).
